# EUROPÄISCHE PATENTSCHRIFT

(11) **EP 3 601 062 B1**
(45) Veröffentlichungstag und Bekanntmachung des Hinweises auf die Patenterteilung: **01.07.2026**
(21) Anmeldenummer: 19717796.7
(22) Anmeldetag: 08.04.2019
(51) Int. Cl.: B67C 7/00, B67B 3/20, B67C 3/26, B29C 49/58

(54) **VERFAHREN UND VORRICHTUNG ZUM BEFÜLLEN VON BEHÄLTERN MIT KARBONISIERTEM FÜLLGUT UND DEM ANSCHLIESSENDEN VERSCHLIESSEN DER GEFÜLLTEN BEHÄLTER**
METHOD AND DEVICE FOR FILLING CONTAINERS WITH CARBONISED FILLING MATERIAL AND SUBSEQUENTLY CLOSING THE FILLED CONTAINERS
PROCÉDÉ ET DISPOSITIF DE REMPLISSAGE DE RÉCIPIENTS AVEC UNE MATIÈRE DE REMPLISSAGE CARBONISÉE PUIS DE FERMETURE DES RECIPIENTS REMPLIS

(30) Priorität: 12.04.2018 DE 102018108760
(43) Veröffentlichungstag der Anmeldung: 05.02.2020
(73) Patentinhaber: KHS GmbH, 44143 Dortmund (DE)
(72) Erfinder: LINKE, Michael, 22159 Hamburg (DE); BAUMGARTE, Rolf, 22926 Ahrensburg (DE); LITZENBERG, Michael, 21039 Börnsen (DE); JAISER, Benjamin, 20144 Hamburg (DE); BERGER, Frank, 22885 Barsbüttel (DE)
(74) Vertreter: Eisenführ Speiser
(86) Internationale Anmeldenummer: PCT/EP2019/058807
(87) Internationale Veröffentlichungsnummer: WO 2019/197337

(56) Entgegenhaltungen:
- EP-A1- 2 028 108
- EP-A2- 2 937 310
- WO-A1-2012/104019
- WO-A1-2013/020884
- WO-A1-2014/189965
- US-A- 1 882 860
- US-A- 2 695 743

## Beschreibung

Die Erfindung bezieht sich auf ein Verfahren nach dem Oberbegriff des Anspruches 1 sowie auf eine Vorrichtung nach dem Oberbegriff des Anspruches 9.

In üblichen Verfahren zum Befüllen von Behältern bei hohen Produktionsgeschwindigkeiten kommen sogenannte Füllstationen zum Einsatz. Die Füllstationen sind z.B. auf Arbeitsrädern angeordnet, die mit geeigneten Einrichtungen für die Zuführung von leeren Behältern und den Abtransport der gefüllten Behälter kooperieren. Die leeren Behälter werden dabei zunächst in die Füllstation eingesetzt. Im nächsten Schritt senkt sich ein in der Füllstation vorgesehener Füllkopf in eine Arbeitsposition auf die Öffnung des Behälters und dichtet diese ab. In dieser Arbeitsposition erfolgt der Füllvorgang, bei dem das Füllgut durch den Füllkopf unter Druck in den Behälter eingeleitet wird. Nach Abschluss der Befüllung wird der Füllkopf in eine von der Behälteröffnung beabstandete Ruheposition bewegt. Der Behälter kann dann entnommen und weitertransportiert werden, z.B. zu weiteren Bearbeitungsstationen (Verschließer, Etikettierer, etc.).

Die Erfindung bezieht sich dabei nicht nur auf den reinen Füllvorgang, d. h. einen Vorgang, in dem bereits fertig ausgeformte Behälter mit Füllgut versehen werden. Gleichzeitig deckt die Erfindung auch Verfahren und Vorrichtungen ab, bei denen in äußere Formen eingesetzte Vorformlinge, auch als Preforms bezeichnet, durch Einleiten des Füllgutes unter einem Form- und Fülldruck in die endgültige, durch die äußere Form vorgegebene Behälterkontur expandiert werden. Hierbei dient das Füllgut zusätzlich als hydraulisches Druckmedium. Typischerweise erfolgt die Einleitung des Füllgutes in die Preforms bei Drücken zwischen 10 und 40 bar, in der Regel bei 20 bar, die deutlich über den sonst üblicherweise vorgesehenen Fülldrücken liegen, wenn fertig ausgeformte Behälter befüllt werden. Das gleichzeitige Formen und Füllen von Behältern aus Vorformlingen erfolgt in sogenannten Form- und Füllmaschinen. Ein wesentlicher Vorteil dieser Verfahren und Vorrichtungen ist, dass nur noch eine Maschine erforderlich ist. Diese weist allerdings eine erhöhte Komplexität auf. Beispiele für solche Maschinen zeigen die US 7,914,726 B2 und die DE 10 2010 007 541 A1.

Ein Problem bei bekannten Füll- bzw. Formfüllverfahren bzw. bei dafür eingesetzten Vorrichtungen ist, dass es nach Beendigung des Füllvorganges in der Phase zwischen dem Bewegen des Füllkopfes in eine von der Behälteröffnung beabstandete Position bis zum Verschließen der Öffnung zu ungewolltem Austreten des Füllgutes aus dem Behälter kommen kann.

Das kann z. B. darauf zurückzuführen sein, dass ein gefüllter Behälter während des Transports zu einer Verschließstation abrupte Richtungsänderungen erfährt, die zu einem Überschwappen des Füllgutes führen. Insbesondere bei der Abfüllung von voll- oder teilkarbonisierten Getränken kann es darüber hinaus durch die beim Anheben des Füllkopfes erfolgende Entlastung des Fülldruckes auf den Umgebungsdruck zu unerwünschter, zum Teil massiver Schaumbildung kommen, die wiederum zu Flüssigkeitsverlust und zu unerwünschter Verschmutzung der Behälter bzw. der Füllstation führen kann. Dies ist insbesondere ein Problem bei den oben erwähnten hohen Form- und Fülldrucken.

Die durch eventuelle Richtungswechsel hervorgerufenen Füllgutverluste lassen sich dadurch vermeiden, dass die Behälter unmittelbar nach ihrer Befüllung noch in der Füll- bzw. Form- und Füllstation verschlossen werden. Bekannt ist dies z. B. bereits aus der DE 10 2010 007 541 A1, der WO2013/020884 A1 und aus der WO 2012/104019 A1. Dazu sind in der Regel Verschließeinrichtungen vorgesehen, die entweder koaxial und drehbeweglich relativ zum Füllkopf angeordnet sind oder der Füllkopf wird zusammen mit der Verschließeinrichtung in einem Werkzeugträger gehalten und abwechselnd in einer Arbeitsanordnung oder Ruheanordnung positioniert. Die Verschließeinrichtung schraubt bei beiden bekannten Varianten eine Schraubverschlusskappe auf den gefüllten Behälter.

Im Hinblick auf Probleme, die insbesondere beim Abfüllen von karbonisiertem Füllgut in Füllstationen bei Entlastung des Behälterinnenraums vom Fülldruck auftreten, sieht die gattungsgemäße EP 2 937 310 A2 weiterhin vor, dass in einem die Öffnung eines gefüllten Behälters in einer Füllstation umgebenden Bereich vor dem Entfernen des Füllkopfes von der Behälteröffnung ein Überdruck eingestellt wird. Dieser umgebende Bereich wird von einem Druckraum gebildet. Der Überdruck in dem Druckraum ist so gewählt, dass das in dem Behälter befindliche Füllgut nicht oder nur begrenzt aufschäumt und nicht aus dem Behälter austritt, wenn der Füllkopf außer Eingriff mit der Behälteröffnung gebracht wird. Der Überdruck soll dabei dem Fülldruck entsprechen und ein Verschließen bei diesem Fülldruck erfolgen. Nachteilig ist, dass der Füllkopf von der Seite in den Druckraum bewegt wird, was einen relativ hohen konstruktiven Aufwand erfordert. Aus der US 1 882 860 A sind ein weiteres Verfahren und eine entsprechende Vorrichtung bekannt. Es handelt sich um eine Maschine zum Befüllen von Flaschen mit Getränken bekannter Art, bestehend aus hochkonzentriertem Wasser und Aromastoffen, und zum Verschließen derselben. In dieser Maschine werden die Flaschen zunächst einem Sirupgeber zugeführt, der eine bestimmte, vorab festgelegte Menge Sirup in jede Flasche füllt, und anschließend einem Füll- und Verschlusskopf, in dem die Flasche bis zum gewünschten Füllstand befüllt und mit einem Verschluss oder einer Krone verschlossen wird, wobei zwischen dem Einfüllen des Wassers und dem Abschluss des Verschlussvorgangs keine Möglichkeit besteht, dass das Gas aus der Flüssigkeit entweicht.

Aufgabe der Erfindung ist es daher, ein Verfahren sowie eine Vorrichtung zu schaffen, bei der die Nachteile des Standes der Technik überwunden werden.

Gelöst wird diese Aufgabe durch ein Verfahren mit den Merkmalen des Anspruchs 1 bzw. durch eine Vorrichtung mit den Merkmalen des Anspruchs 9.

Weitere vorteilhafte Ausgestaltungen sind in den Unteransprüchen angeben. Erfindungsgemäß ist demnach vorgesehen, dass der Füllkopf sich in der Ruheposition oberhalb der Behälteröffnung befindet und von dort in axialer Richtung in die Arbeitsposition bewegt wird.

Wie im Stand der Technik ist weiterhin vorgesehen, dass in einem die Öffnung des gefüllten Behälters in der Füllstation umgebenden Bereich vor dem Abheben des Füllkopfes von der Behälteröffnung ein Überdruck eingestellt wird. Dieser umgebende Bereich wird von einem Druckraum gebildet. Der Überdruck in dem Druckraum ist so gewählt, dass das in dem Behälter befindliche Füllgut nicht oder nur begrenzt aufschäumt und nicht aus dem Behälter austritt, wenn der Füllkopf angehoben wird. Danach kann dann problemlos ein Verschließen der Behälteröffnung noch in der Füllstation erfolgen. Nach dem Verschließen kann dann die Füllstation von dem eingestellten Überdruck auf Umgebungsdruck entlastet werden. Der Druckraum stellt erfindungsgemäß gewissermaßen das Vorsehen eines Zwischendruckniveaus zwischen Umgebungsdruck und Fülldruck bzw. Form- und Fülldruck dar.

In baulicher Hinsicht muss der Druckraum die Behälteröffnung, das behälterseitige Ende des Füllkopfes sowie eine Verschlusskappe in abgedichteter Weise so aufnehmen und abgedichtet umschließen können, dass ohne signifikanten Einbruch des Druckniveaus ein Abheben des Füllkopfes vom Behälter und ein Verschließen des Behälters mit einer Verschlusskappe erfolgen kann.

Damit ist sichergestellt, dass das Verschmutzungsrisiko zwischen Abheben des Füllkopfes und Verschließen der Behälteröffnung minimiert wird. Wie oben bereits erwähnt ist die erfindungsgemäße Lösung insbesondere von Vorteil, wenn gemäß der erfinderischen Vorrichtung die zu befüllenden Behälter sogenannte Preforms oder Vorformlinge sind, die während des Füllvorganges erst zu dem fertigen Behälter umgeformt werden. Solche Vorformlinge bestehen aus einem thermoplastischen Material, wobei der Vorformling vor seiner Ausformung zunächst thermisch konditioniert und anschließend innerhalb einer Form mit dem Füllgut als Druckmedium in den Behälter umgeformt wird. Dies erfolgt in einer sogenannten Form- und Füllstation, d. h. einer Station, die zusätzlich zu dem Füllen auch das Formen des Behälters übernimmt. Im Wesentlichen erfolgt der Form- und Füllvorgang wie ein Füllvorgang, allerdings mit dem Unterschied, dass das Füllmedium mit gegenüber reinen Füllvorgängen höheren Drücken, z.B. zwischen 10 und 40 bar, in den Vorformling eingeleitet wird, und dass gegebenenfalls in der Form- und Füllstation noch eine axial bewegliche durch den Form- und Füllkopf verlaufende Reckstange vorgesehen ist, die in den Vorformling eingefahren wird und diesen in dessen Achsrichtung reckt. Wenn im Folgenden von Füllköpfen bzw. -stationen und von Füllen gesprochen wird, so sollen diese Bezeichnungen in der Regel auch Form- und Fülleinrichtungen bzw. Form- und Füllverfahren mit einschließen.

Der in dem die Behälteröffnung umgebenden Bereich der Füllstation, nämlich in dem Druckraum, eingestellte Überdruck entspricht vorzugsweise etwa oder mindestens dem Sättigungsdruck des in dem Behälter befindlichen CO₂. Bei üblichen Karbonisierungen von 5-9 g/l CO₂ (alkoholfreie Erfrischungsgetränke) liegt der Sättigungsdruck z.B. zwischen ca. 4-10 bar, in der Regel bei Werten von ca. 5 bar.

Vorzugsweise kann vorgesehen sein, dass der Behälterinnendruck vor dem Abheben des Füllkopfes über z. B. eine Druckausgleichsleitung zunächst auf den umgebenden Überdruck im Druckraum abgesenkt wird. Diese Druckausgleichsleitung verbindet den Druckraum durch den Füllkopf hindurch mit dem Behälterinneren, z.B. bei in Arbeitsposition befindlichem Füllkopf. Die Druckausgleichsleitung kann z.B. durch ein steuerbares Ventil beherrscht sein. Es ist auch möglich, dass die Druckausgleichsleitung von der Reckstange freigegeben wird, wenn diese nach Abschluss der Form- und Füllvorganges in eine Ruheposition zurückgefahren wird. Durch eine solche Druckausgleichsleitung lässt sich vermeiden, dass es beim Anheben des Füllkopfes zu einer schlagartigen Entlastung auf den im Druckraum eingestellten Überdruck kommt.

Weiterhin vorzugsweise wird der Überdruck im Druckraum der Füllstation in einer CO₂-Atmosphäre eingestellt. Denkbar ist aber auch, ein anderes Gas, z.B. Luft, Stickstoff, Sauerstoff H2O2, Schutzgase, Inertgase wie z.B. Helium oder Argon, oder Lachgas zu verwenden.

Weiterhin vorzugsweise ist vorgesehen, dass der Behälter mit einer Schraubverschlusskappe verschlossen wird. Diese kann z.B. mit einer geeigneten Verschließeinrichtung im Druckraum der Füllstation auf den Behälter aufgeschraubt werden.

Besonders bevorzugt wird die Kappe in der Füllstation jedoch zunächst ohne Schraubbewegung in Behälterlängsrichtung auf die Öffnung bis in mindestens eine erste Abdichtposition aufgedrückt und das finale Aufschrauben, falls noch erforderlich, später vorgenommen, z.B. nach Entnahme des Behälters aus der Füllstation. Das Aufdrücken kann dabei der Füllkopf übernehmen durch das Ausführen einer Aufdrückhubbewegung.

Die letztgenannte Ausgestaltung ist insbesondere deswegen vorteilhaft, weil sie auf einfache Weise durch Andrücken des Schraubverschlusses mit dem Füllkopf vorgenommen werden kann, ohne dass hier aufwendige konstruktive Änderungen am Füllkopf oder in der Füllstation erforderlich sind.

Bevorzugt erfolgt eine Entlastung des Druckraumes auf Umgebungsdruck erst, wenn eine Verschlusskappe auf den Behälter aufgebracht worden ist.

Die Erfindung betrifft weiterhin auch eine Vorrichtung, mit der das Verfahren durchgeführt werden kann.

Die erfindungsgemäße Füllstation weist einen Bereich auf, in den ein Behälter so eingesetzt werden kann, dass seine Öffnung fluchtend zu einem axial beweglichen Füllkopf ausgerichtet ist. Der Füllkopf lässt sich zwischen einer Arbeitsposition, in der er abdichtend auf die Behälteröffnung aufsetzt, und einer z. B. Ruheposition verschieben, in der er oberhalb und beanstandet zu der Öffnung positioniert ist. Der Füllkopf ist in bekannter Weise der Lage, in der Arbeitsposition ein Füllgut mit vorher eingestelltem Fülldruck in den Behälter einzuleiten.

Wie im Stand der Technik ist vorgesehen, dass in der Füllstation ein die Öffnung des Behälters sowie das behälterseitige Ende des Füllkopfes umgebender Raum gebildet ist, in dem sich ein Überdruck einstellen lässt. Diesen Druckraum bildet z. B. eine in diesem Bereich vorgesehene Druckkammer oder Druckglocke, die die Behälteröffnung, das behälterseitige Ende des Füllkopfes sowie eine Verschlusskappe in abgedichteter Weise aufnehmen und abgedichtet umschließt, damit ohne signifikanten Einbruch des Druckniveaus ein Abheben des Füllkopfes vom Behälter und ein Verschließen des Behälters mit einer Verschlusskappe erfolgen kann. Der Druckraum kann Zu- und Ableitungen aufweisen, über die sich (z.B. ventilgesteuert) der gewünschte Überdruck in einer gewünschten Atmosphäre, z.B. CO₂ oder den weiteren oben genannten Gasen einstellen lässt.

Weiterhin ist in dem Druckraum der Füllstation eine Halterungseinrichtung vorgesehen, in der eine Verschlusskappe so in einer Warteposition angeordnet werden kann, dass sie beim Füllvorgang nicht stört. Dieses Anordnen der Verschlusskappe in der Halterungseinrichtung kann z.B. gleichzeitig mit dem Einsetzen eines Behälters in die Füllstation erfolgen. Die Zuführung der Verschlusskappen in die Warteposition der Halterungseinrichtung kann grundsätzlich unter Verwendung beliebiger Handhabungsmittel erfolgen, die auch bei der Behälter- oder Vorformlingshandhabung bekannt sind, z.B. unter Verwendung von Zangen, oder unter Verwendung sonstiger Kappenzuführeinrichtungen aus dem Stand der Technik.

Nach dem Füllvorgang und nach dem Wegbewegen des Füllkopfes durch Anheben in eine zum Behälter beabstandete Position kann die Verschlusskappe dann von der Halterungseinrichtung oder von einer Positioniereinrichtung für die Verschlusskappe aus der Warteposition in eine Position zwischen Füllkopf und Behälteröffnung gebracht werden und dann nachfolgend im Druckraum z.B. auf die Öffnung aufgedrückt oder aufschraubt werden.

Bevorzugt ist vorgesehen, dass die Verschlusskappe mit dem Füllkopf in Behälterlängsrichtung auf die Öffnung gedrückt wird. Dieses Aufdrücken der Verschlusskappe kann z.B. bis zu einer ersten Dichtposition erfolgen, die zunächst lediglich sicherstellt, dass bei Handhabung des Behälters während der Entnahme vom Arbeitsrad oder bei der Entlastung vom eingestellten Überdruck in dem Druckraum auf den Umgebungsdruck keine Füllgutverluste auftreten. Es kann vorgesehen sein, dass in einem späteren Verschließschritt, z.B. außerhalb der Füllstation, die Verschlusskappe erst in seine endgültige Verschließposition gebracht wird.

Es ist aber auch möglich, dass bereits im Druckraum der Füllstation die Verschlusskappe, z.B. eine Schraubverschlusskappe, in ihre endgültige Schließposition gebracht wird, z.B. indem sie vollständig auf den Behälter gedrückt und/oder geschraubt wird bis zum Erreichen der endgültigen Schließposition. Es versteht sich, dass die erfindungsgemäße Vorrichtung die erforderliche steuerungstechnische Ausstattung aufweist, damit der Füllkopf in der beschriebenen Weise die verschiedenen Positionierungen einnehmen und die geschilderten Bewegungen ausführen kann bzw. gesteuert ausführt.

Eine äußerst kompakte Konstruktion wird dadurch unterstützt, dass die Behälter bei den beschriebenen Verfahren und Vorrichtungen auf einem rotierenden Arbeitsrad geformt, gefüllt und verschlossen werden. Im Produktionsbetrieb läuft dieses Arbeitsrad kontinuierlich um.

Im Gegensatz zu einer bloßen Füllstation kann eine Form- und Füllstation noch eine Reckstange aufweisen, die axial verschiebbar in dem Füllkopf aufgenommen ist. Ansonsten sind die konstruktiven Grundprinzipien einer Form- und Füllstation jedoch ähnlich zu denen einer Füllstation.

Grundsätzlich ist festzuhalten, dass es nur mit dem erfindungsgemäß fluchtend zum Behälter bewegbaren Füllkopf möglich ist, sowohl eine reine Füllstation als auch eine Form- und Füllstation bereitzustellen. Eine gattungsgemäße Station, wie der EP 2 937 310 A2 beschrieben, liesse sich dagegen nicht zu einer Form- und Füllstation weiterbilden, da die üblicherweise durch den Füllkopf verlaufende Reckstange ein seitliches Einsetzen des Füllkopfes in die Station nicht erlauben dürfte.

Im Folgenden soll die Erfindung anhand mehrerer Abbildungen näher erläutert werden. Dabei zeigt:
- Fig. 1: eine Ausführung der erfindungsgemäßen Vorrichtung als Füllstation,
- Fig. 2: eine Ausführung der erfindungsgemäßen Vorrichtung als Form- und Füllstation,
- Fig. 3: eine Darstellung einer geeigneten Schiene, in der sich die Verschlusskappe verschieben lässt.

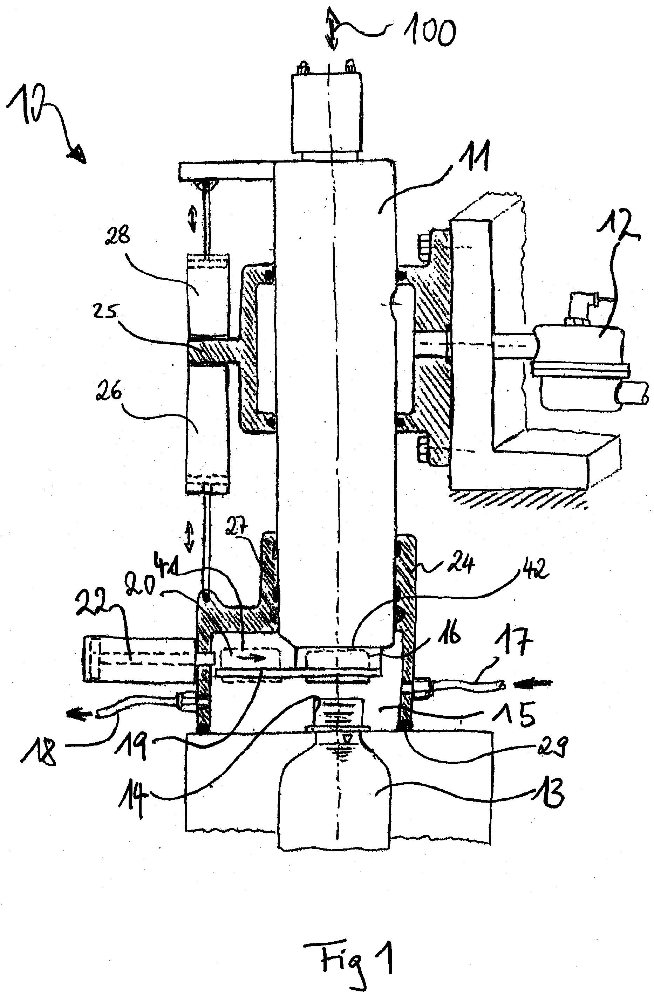

Der grundsätzliche Aufbau einer Maschine zum Füllen von Behältern bzw. zum gleichzeitigen Formen und Füllen von Behältern aus Vorformlingen ist aus dem Stand der Technik hinlänglich bekannt. Zur Vermeidung von Wiederholungen wird zu einer Form- und Füllmaschine auf die DE 10 2010 007 541 A1 verwiesen, insbesondere auf die dortigen Absätze [0028] bis [0065] sowie auf die dortigen Figuren 1 bis 8. Nachfolgend werden hierzu lediglich die für die vorliegende Erfindung relevanten Besonderheiten beschrieben.

Figur 1 zeigt eine schematische Ansicht einer Füllstation 10 mit einem in axialer Richtung verschiebbar angeordneten Füllkopf 11, der über eine Zuleitung 12 mit dem abzufüllenden Füllgut beaufschlagt werden kann. Weiterhin dargestellt ist ein Behälter 13, der in seiner Füllstellung angeordnet ist. Die füllkopfseitig ausgerichtete Behälteröffnung 14 befindet sich innerhalb einer Druckkammer 15. Die Druckkammer 15 umgibt sowohl die Behälteröffnung 14 als auch ein dem Behälter 13 zugewandtes Ende 16 des Füllkopfes 11. Dieses Ende 16 des Füllkopfes 11 ist so ausgestaltet, dass es bei Absenkung des Füllkopfes 11 in abdichtende Anlage mit der Öffnung 14 des Behälters gelangt, worauf dann die Befüllung erfolgen kann.

Die Druckkammer 15 wird von einem glockenartigen Kammerkörper 24 gebildet, der höhenbeweglich relativ zu einem Trägerelement 25 der Füllmaschine angeordnet ist. Die Höhenbeweglichkeit ist schematisch angedeutet durch den dargestellten Hydraulikzylinder 26. Der Füllkopf 11 durchsetzt abgedichtet und axialverschieblich, d.h. in Richtung des Pfeils 100, die behälterabgewandte Kammerkörperwand 27. Auch der Füllkopf ist in schematisch angedeuteter Weise höhenbeweglich relativ zum Trägerelement 25, angedeutet durch einen weiteren Aktor 28. Auf seiner behälterseitigen Unterseite weist der Kammerkörper 24 eine umlaufende Dichtung 29 auf. In der dargestellten Dichtposition des Kammerkörpers 24 liegt diese Dichtung 29 dichtend auf. Über den Hydraulikzylinder bzw. Aktor 26 kann der Kammerkörper 24 angehoben werden, um eine Entnahme des gefüllten Behälters 13, ein Einsetzen eines leeren Behälters und das Nachführen einer Verschlusskappe 20 zu ermöglichen.

Über eine Zuleitung 17 und eine Ableitung 18 kann in der Druckkammer 15 ein gewünschter Überdruck mit einem geeigneten Gas eingestellt werden. Weiterhin zu erkennen ist in der Druckkammer 15 eine als Schiene 19 ausgebildete Halterungseinrichtung, in der eine Verschlusskappe 20 in einer Warteposition 41 aufgenommen ist. Mittels eines Ladefingers 22 kann die Verschlusskappe 20 aus der gezeigten Warteposition 41 in eine Position 42 zwischen dem Ende 16 des Füllkopfes 11 und der Behälteröffnung 14 verschoben werden. Danach kann dann die Kappe 20 mit dem Ende 16 des Füllkopfes 11 durch eine entsprechende Absenkbewegung des Füllkopfes 11 auf die Öffnung 14 aufgedrückt werden.

Die Zuführung von Verschlusskappen, z.B. von Schraubverschlusskappen, in die Warteposition 41 der Halterungseinrichtung erfolgt durch eine nicht dargestellte Kappenzuführeinrichtung. Dabei kann es sich z.B. um eine Zuführschiene handeln, in der die Kappen der Füllstation rutschend zugeführt werden.

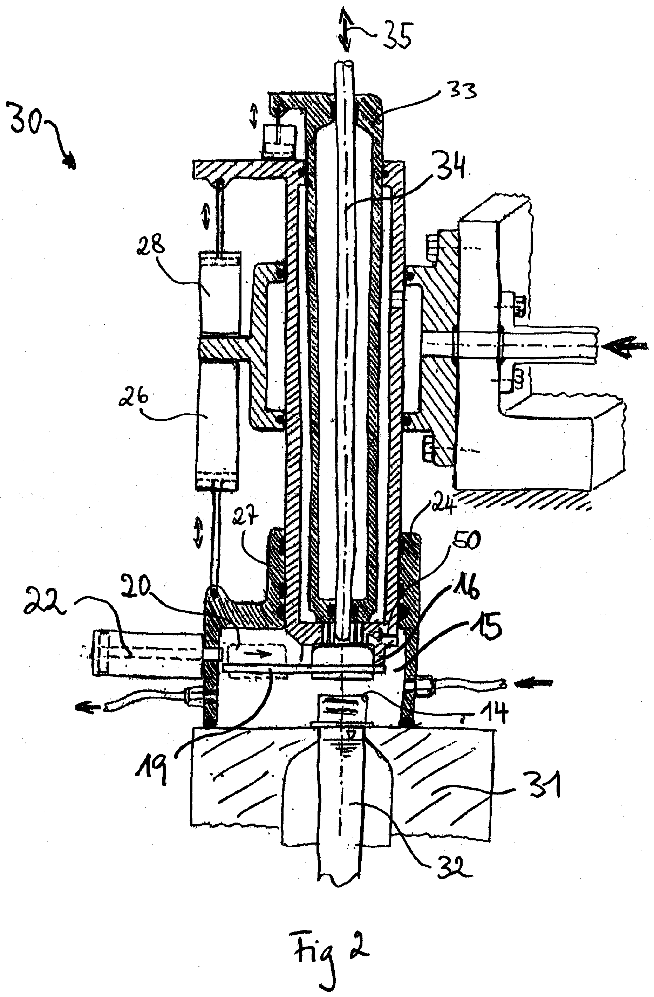

Figur 2 zeigt eine Füllstation, die als Form- und Füllstation ausgebildet ist. Im Wesentlichen stimmt diese Form- und Füllstation 30 mit der in Figur 1 gezeigten Füllstation 10 überein. Übereinstimmende Bauteile werden daher mit gleichen Referenzzeichen wie in Fig.1 bezeichnet.

Im Unterschied zu Figur 1 wird in der in Fig. 2 dargestellten Form- und Füllstation 30 kein fertiger Behälter gefüllt, sondern ein in eine äußere Form 31 eingesetzter Vorformling 32. Wie eingangs bereits ausgeführt ist der Vorformling 32 zuvor dergestalt thermisch konditioniert worden, dass er bei Einleitung eines Füllmediums bei entsprechendem Druck in der Form 31 zur endgültigen Behälterform expandiert werden kann. Um diesen Prozess zu unterstützen ist weist die Form und Füllstation einen Form- und Füllkopf 33 auf, in dem eine Reckstange 34 vorgesehen ist, die in Richtung des Pfeiles 35 verschoben werden kann. Während des Form- und Füllvorganges wird die Reckstange 34 in den Vorformling 32 abgesenkt und reckt diesen in Längsrichtung. Nach Abschluss des Form- und Füllvorganges wird die Reckstange 34 in den Füllkopf 33 zurückgezogen und gibt dann vorzugsweise ein nicht gezeigtes Druckausgleichsventil frei, über den der in dem nun ausgeformten Behälter 13 herrschende Innendruck auf einen in einer umgebenden Druckkammer 15 herrschenden Überdruck entlastet wird.

Im dargestellten Ausführungsbeispiel ist der Kammerkörper 24 erneut in seiner Dichtposition gezeigt und die Dichtung 29 liegt dichtend an der Form 31 an.

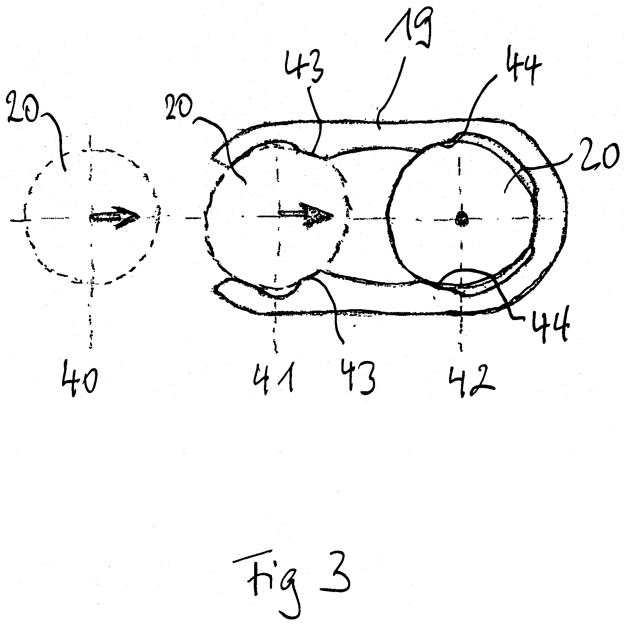

Figur 3 zeigt eine als Schiene 19 ausgebildete Halterungseinrichtung, wie sie gleichermaßen in der in Figur 1 gezeigten Füllstation, aber auch in der in Figur 2 gezeigten Form- und Füllstation zur Aufnahme und Verschiebung einer Kappe 20 in dem Druckraum 15 zum Einsatz kommen kann. Über eine nicht gezeigte Kappenzuführeinrichtung wird die Kappe 20 vor Beginn des Füllvorganges aus einer Übergabeposition 40 an die Schiene 19 übergeben und dort in einer durch Klemmnocken 43 vorgegebenen Warteposition 41 angeordnet. Danach wird (nach Einnehmen der Dichtposition des Kammerkörpers) dann über die Leitungen 17 und 18 die gewünschte Überdruckatmosphäre in der Druckkammer 15 eingestellt, und der Füllvorgang kann durchgeführt werden. Nach Abschluss des Füllvorganges wird der Füllkopf 11 bzw. 33 wieder außer Eingriff mit der Öffnung 14 des Behälters 13 gebracht. Anschließend wird mit dem in Figur 1 und 2 gezeigten Ladefinger 22 die Kappe 20 in eine durch Nocken 44 definierte Aufdrückposition 42 zwischen die Öffnung 14 des Behälters 13, 32 und dem freien Ende 16 des Füllkopfes 11, 33 gebracht. Der Füllkopf 11, 33 wird dann abgesenkt und presst die Kappe 20 auf die Öffnung 14 auf. In analoger Weise erfolgen die Befüllung und das Verschließen von Behältern in Form- und Füllstationen.

## Patentansprüche

1. Verfahren zum Befüllen eines Behälters (13, 32) mit karbonisiertem flüssigen Füllgut und zum Verschließen des befüllten Behälters,
- bei dem das Füllgut in einer Füllstation (10, 30) von einem Füllkopf (11, 33) mit definiertem Fülldruck in den Behälter (13, 32) eingeleitet wird,
- wobei der Füllkopf (11, 33) zunächst aus einer Ruheposition, die ein Zuführen und Einsetzen eines Behälters (13, 32) in die Füllstation (10, 30) erlaubt, in eine Arbeitsposition zum eingesetzten Behälter bewegt wird, in der ein Endbereich (16) des Füllkopfes die Öffnung (14) des Behälters abdichtet,
- der Behälter (13, 32) dann befüllt wird,
- der Füllkopf (11, 33) nach Abschluss der Füllphase wieder aus der Arbeitsposition in eine zum Behälter (13, 32) beabstandete Ruheposition bewegt wird
- und der Behälter (13, 32) dann in der Füllstation (10, 30) mit einer Verschlusskappe (20) mindestens soweit verschlossen wird, dass kein Füllgut mehr austreten kann, und
- der Behälter (13, 32) dann aus der Füllstation (10, 30) entnommen wird,
**dadurch gekennzeichnet, dass**
vor der Bewegung des Füllkopfs (11, 33) aus der Arbeitsposition in die vom Behälter (13) beabstandete Ruheposition in einem die Öffnung (14) des eingesetzten Behälters (13, 32) umgebenden Druckraum (15) der Füllstation (10, 30) ein zwischen dem Umgebungsdruck und dem Fülldruck liegender Überdruck eingestellt wird, der so gewählt ist, dass ein eventuelles Aufschäumen des in dem Behälter (13, 32) befindlichen Füllguts soweit minimiert wird, dass kein Füllgut aus dem Behälter (13, 32) austritt, wenn der Füllkopf (11, 33) nach dem Füllvorgang aus der Arbeitsposition bewegt wird, wobei sich der Füllkopf (11, 31) in der Ruheposition oberhalb der Behälteröffnung (14) befindet und wobei der Füllkopf (11,31) durch axiale Bewegung in Behälterlängsrichtung (100) bewegt wird.

2. Verfahren nach Anspruch 1, **dadurch gekennzeichnet, dass** der Behälter (32) ein Vorformling ist, der in eine Form (31) eingesetzt in der Füllstation (33) durch Einleiten von Füllgut gleichzeitig gefüllt und in die durch die Form (31) vorgegebene Behälterkontur expandiert wird.

3. Verfahren nach Anspruch 1 oder 2, **dadurch gekennzeichnet, dass** vor dem Anheben des Füllkopfes (11, 33) aus der Arbeitsposition der gefüllte Behälter zunächst vom Fülldruck auf den im umgebenden Druckraum (15) der Füllstation (10, 30) eingestellten Überdruck entlastet wird.

4. Verfahren nach einem der Ansprüche 1 bis 3, **dadurch gekennzeichnet, dass** der im Druckraum (15) eingestellte Überdruck zwischen 4-10 bar liegt.

5. Verfahren nach einem der Ansprüche 1 bis 4, **dadurch gekennzeichnet, dass** zum Verschließen des Behälters (13, 32) eine Verschlusskappe (20), insbesondere eine Schraubverschlusskappe, die im umgebenden Druckraum (15) der Füllstation (33) angeordnet worden ist, auf die Behälteröffnung (14) in Behälterlängsrichtung bis in mindestens eine erste Dichtposition aufgedrückt wird.

6. Verfahren nach Anspruch 5, **dadurch gekennzeichnet, dass** das Aufdrücken der Verschlusskappe (12) durch den Füllkopf (11, 33) mittels einer axialen Aufdrückhubbewegung erfolgt.

7. Verfahren nach einem der Ansprüche 1 bis 6, **dadurch gekennzeichnet, dass** der Überdruck im umgebenden Druckraum (15) der Füllstation (33) in einer CO₂-Atmosphäre eingestellt wird.

8. Verfahren nach einem der Ansprüche 1 bis 7, **dadurch gekennzeichnet, dass** der im umgebenden Druckraum (15) der Füllstation (33) eingestellte Überdruck erst auf Umgebungsdruck entlastet wird, nachdem die Verschlusskappe (20) auf die Behälteröffnung (14) aufgedrückt worden ist.

9. Vorrichtung zum Befüllen von Behältern (13, 32) mit einem karbonisierten flüssigen Füllgut, mit wenigstens einer Füllstation (10, 30), die einen Füllkopf (11, 33) zum Einleiten des Füllgutes in den Behälter (13, 32) unter Druck aufweist, mit einer Verschließeinrichtung zum Verschließen des Behälters (13, 32) mit einer Verschlusskappe (20) und mit einer Kappenzuführeinrichtung zum Zuführen einer Verschlusskappe (20) zu der Füllstation (10, 30), wobei in der Füllstation (10, 30) ein Druckraum (15) vorgesehen ist, der ausgeführt und angeordnet ist, im Gebrauchszustand die Öffnung (14) des Behälters (13, 32) und das dem Behälter zugewandte Ende (16) des Füllkopfes (11, 33) sowie eine Kappenhalterung mit daran angeordneter Verschlusskappe nach außen abgedichtet aufzunehmen, wobei der Füllkopf (11, 33) beweglich ausgeführt ist für eine Bewegung aus einer Ruheposition, die ein Zuführen und Einsetzen eines Behälters (13, 32) in die Füllstation (10, 30) erlaubt, in eine Arbeitsposition, in der ein Endbereich (16) des Füllkopfes die Öffnung (14) des in die Füllstation (10, 30) eingesetzten Behälters abdichtet, wobei der Füllkopf (11, 33) im Gebrauchszustand axial in Behälterlängsrichtung (100) bewegbar in der Station (10, 30) aufgenommen ist und in seiner Ruheposition oberhalb der Behälteröffnung (11, 33) des in die Füllstation (10, 30) eingesetzten Behälters angeordnet ist, wobei der Behälter ein Vorformling (32) ist, der nach seiner thermischen Konditionierung in der Füllstation (33) durch Einleiten des Füllguts zu einem fertigen Behälter ausgeformt wird, wobei die Füllstation (33) eine Form (31) aufweist, in die der Vorformling (32) für den Füllvorgang einsetzbar ist und die die endgültige Kontur des zu formenden Behälters vorgibt, und einen Füllkopf (33) aufweist, in dem vorzugsweise eine axial verschiebbare Reckstange (34) zur axialen Reckung und Führung des Vorformlings (32) vorgesehen ist.

10. Vorrichtung nach Anspruch 9, **dadurch gekennzeichnet, dass** die Verschlusskappe eine Schraubverschlusskappe (20) ist, und der Füllkopf (11) bzw. der Form- und Füllkopf (33) zu einem zumindest teilweisen Aufdrücken der Verschlusskappe auf den Behälter (13, 32) ausgebildet und angesteuert ist.

11. Vorrichtung nach einem der Ansprüche 9 oder 10, **dadurch gekennzeichnet, dass** im Druckraum (15) eine Kappenhalterung (19) vorgesehen ist, in die eine Verschlusskappe (20) vor dem Füllvorgang in einer Warteposition (41) anordenbar ist, und die eine Verschiebung der Kappe (20) aus der Warteposition in eine Position zwischen dem behälterseitigen Ende (16) des Füllkopfes (11, 33) und der Öffnung (14) des Behälters (13, 32) erlaubt.

12. Vorrichtung nach einem der Ansprüche 9 bis 11, **dadurch gekennzeichnet, dass** der Druckraum an eine Zuführleitung (17) für ein Gas, insbesondere CO₂, angeschlossen ist.

13. Vorrichtung nach einem der vorhergehenden Ansprüche 9 bis 12, **dadurch gekennzeichnet, dass** der Füllkopf (11, 33) eine Druckausgleichsleitung (50) zwischen dem Druckraum (15) und dem Inneren des Behälters (13, 31) aufweist, die bevorzugt von einem steuerbaren Ventil beherrscht ist.

## Claims

1. A method for filling a container (13, 32) with carbonised liquid product and for closing the filled container,
- in which the product is introduced in a filling station (10, 30) from a filler head (11, 33) into the container (13, 32) with a defined filling pressure,
- wherein the filler head (11, 33) is moved initially from a rest position, which allows a feeding and inserting of a container (13, 32) into the filling station (10, 30), into a working position to the inserted container, in which an end region (16) of the filler head seals the opening (14) of the container,
- the container (13, 32) is then filled,
- the filler head (11, 33) after completion of the filling phase is again moved from the working position into a rest position spaced apart from the container (13, 32),
- and the container (13, 32) is then closed in the filling station (10, 30) with a cap (20) at least so far that product cannot escape any longer, and
- the container (13, 32) is then removed from the filling station (10, 30),
**characterised in that**
prior to the movement of the filler head (11, 33) from the working position into the rest position spaced apart from the container (13), a positive pressure above the ambient pressure and the filling pressure is set in a pressure space (15) of the filling station (10, 30) surrounding the opening (14) of the inserted container (13, 32), which is selected so that a possible frothing up of the product present in the container (13, 32) is minimised so far that no product escapes from the container (13, 32) when the filler head (11, 33) after the filling operation is moved out of the working position, wherein the filler head (11, 31) in the rest position is located above the container opening (14) and wherein the filler head (11, 31) is moved by axial movement in the container longitudinal direction (100).

2. The method according to Claim 1, **characterised in that** the container (32) is a preform which, inserted into a mould (31), is simultaneously filled and expanded in the filling station (33) into the container contour defined by the mould (31) by introducing product

3. The method according to Claim 1 or 2, **characterised in that** prior to the lifting of the filler head (11, 33) from the working position, the filled container is initially relieved from the filling pressure to the positive pressure set in the surrounding pressure space (15) of the filling station (10, 30).

4. The method according to any one of the Claims 1 to 3, **characterised in that** the positive pressure set in the pressure space (15) is between 4-10 bar.

5. The method according to any one of the Claims 1 to 4, **characterised in that** for closing the container (13, 32) a cap (20), in particular a screw cap which has been arranged in the surrounding pressure space (15) of the filling station (33), is pressed onto the container opening (14) in the container longitudinal direction as far as into at least one first sealing position.

6. The method according to Claim 5, **characterised in that** the pressing of the cap (12) by the filler head (11, 33) takes place by means of an axial pressing stroke movement.

7. The method according to any one of the Claims 1 to 6, **characterised in that** the positive pressure is set in the surrounding pressure space (15) of the filling station (33) in a CO₂ atmosphere.

8. The method according to any one of the Claims 1 to 7, **characterised in that** the positive pressure set in the surrounding pressure space (15) of the filling station (33) is only relieved to ambient pressure after the cap (20) has been pressed onto the container opening (14).

9. A device for filling containers (13, 32) with a carbonised liquid product, having at least one filling station (10, 30) which comprises a filler head (11, 33) for introducing the product into the container (13, 32) under pressure, having a closing device for closing the container (13, 32) with a cap (20) and having a cap feeding device for feeding a cap (20) to the filling station (10, 30), wherein in the filling station (10, 30) a pressure space (15) is provided, which is configured and arranged in the state of usage to receive the opening (14) of the container (13, 32) and the end (16) of the filler head (11, 33) facing the container and a cap holder with a cap arranged thereon, sealed towards the outside, wherein the filler head (11, 33) is embodied so as to be movable for a movement out of a rest position, which allows feeding and inserting a container (13, 32) into the filling station (10, 30), into a working position in which an end region (16) of the filler head seals the opening (14) of the container inserted in the filling station (10, 30),
wherein the filler head (11, 33) in the state of usage is received in the station (10, 30) so as to be axially movable in the container longitudinal direction (100) and in its rest position is arranged above the container opening (11, 33) of the container inserted in the filling station (10, 30),
wherein the container is a preform (32) which, following its thermal conditioning in the filling station (33), is moulded into a finished container by introducing the product, wherein the filling station (33) comprises a mould (31), into which the preform (32) for the filling operation can be inserted and which defines the final contour of the container to be moulded, and comprises a filler head (33) in which preferentially an axially displaceable stretching rod (34) for the axial stretching and guiding of the preform (32) is provided.

10. The device according to Claim 9, **characterised in that** the cap is a screw cap (20) and the filler head (11) or the mould and filler head (33) is configured and controlled for at least partially pressing the the cap onto the container (13, 32).

11. The device according to any one of the Claims 9 or 10, **characterised in that** in the pressure space (15) a cap holder (19) is provided, in which prior to the filling operation a cap (20) can be arranged in a waiting position (41), and which allows displacing the cap (20) from the waiting position into a position between the container-side end (16) of the filler head (11, 33) and the opening (14) of the container (13, 32).

12. The device according to any one of the Claims 9 to 11, **characterised in that** the pressure space is connected to a feedline (17) for a gas, in particular CO₂.

13. The device according to any one of the preceding Claims 9 to 12, **characterised in that** the filler head (11, 33) comprises a pressure equalisation line (50) between the pressure space (15) and the interior of the container (13, 31), which is preferentially controlled by a controllable valve.

## Revendications

1. Procédé de remplissage d'un récipient (13, 32) avec un produit de remplissage liquide carbonisé et d'obturation du récipient rempli,
- dans le cadre duquel le produit de remplissage est introduit dans une station de remplissage (10, 30) par une tête de remplissage (11, 33) avec une pression de remplissage définie,
- la tête de remplissage (11, 33) étant d'abord déplacée d'une position de repos qui permet l'amenée d'un récipient (13, 32) et son introduction dans la station de remplissage (10, 30) vers une position de travail au niveau du récipient dans laquelle une section d'extrémité (16) de la tête de remplissage étanchéifie l'ouverture (14) du récipient,
- le récipient (13, 32) étant alors rempli,
- la tête de remplissage (11, 33) étant à nouveau déplacée à l'issue de la phase de remplissage de la position de travail vers une position de repos à une certaine distance du récipient (13, 32)
- le récipient (13, 32) étant obturé dans la station de remplissage (10, 30) avec un capuchon de fermeture (20) au moins de façon à empêcher le produit de remplissage de s'en échapper, et
- le récipient (13, 32) étant alors retiré de la station de remplissage (10, 30),
**caractérisé en ce que,**
dans un espace environnant (15) sous pression de la station de remplissage (10, 30) qui entoure l'ouverture (14) du récipient (13, 32) introduit, une surpression comprise entre la pression ambiante et la pression de remplissage est réglée avant le déplacement de la tête de remplissage (11, 33) de la position de travail vers la position de repos à une certaine distance du récipient (13) sur une valeur telle qu'une éventuelle effervescence du produit de remplissage contenu dans le récipient (13, 32) soit minimisée pour éviter un débordement du produit de remplissage hors du récipient (13, 32) lorsque la tête de remplissage (11, 33) est déplacée de la position de travail à l'issue du processus de remplissage, la tête de remplissage (11, 31) en position de repos se trouvant alors au-dessus de l'ouverture (14) du récipient et la tête de remplissage (11, 31) étant déplacée par un mouvement axial en sens longitudinal (100) du récipient.

2. Procédé selon la revendication 1, **caractérisé en ce que** le récipient (32) est une préforme placée dans un moule (31) et remplie dans la station de remplissage (33) par introduction d'un produit de remplissage en même temps qu'elle est expansée pour prendre la forme du contour imposé par le moule (31).

3. Procédé selon la revendication 1 ou 2, **caractérisé en ce que** la pression de remplissage dans le récipient rempli est d'abord ramenée à la surpression ambiante réglée dans l'espace environnant (15) sous pression de la station de remplissage (10, 30) avant de lever la tête de remplissage (11, 33) au-dessus de sa position de travail.

4. Procédé selon l'une des revendications 1 à 3, **caractérisé en ce que** la surpression dans l'espace environnant (15) sous pression est réglée sur une valeur entre 4 et 10 bars.

5. Procédé selon l'une des revendications 1 à 4, **caractérisé en ce qu'**un capuchon de fermeture (20), notamment un capuchon de fermeture fileté, lequel a été positionné dans l'espace environnant (15) sous pression de la station de remplissage (33) est pressé pour l'obturation du récipient (13, 32) sur son ouverture (14) en direction longitudinale du récipient jusqu'à atteindre au moins une première position d'obturation étanche.

6. Procédé selon la revendication 5, **caractérisé en ce que** la pression du capuchon de fermeture (12) est effectuée par un mouvement d'abaissement axial de la tête de remplissage (11, 33) .

7. Procédé selon l'une des revendications 1 à 6, **caractérisé en ce que** la surpression dans l'espace environnant (15) sous pression de la station de remplissage (33) est celle d'une atmosphère de CO₂.

8. Procédé selon l'une des revendications 1 à 7, **caractérisé en ce que** la surpression dans l'espace environnant (15) sous pression de la station de remplissage (33) n'est ramenée à la pression ambiante qu'après que le capuchon de fermeture (20) ait été pressé sur l'ouverture (14) du récipient.

9. Dispositif de remplissage de récipients (13, 32) avec un produit de remplissage liquide carbonisé, avec au moins une station de remplissage (10, 30) présentant une tête de remplissage (11, 33) pour l'introduction sous pression du produit de remplissage dans le récipient (13, 32), avec un dispositif d'obturation pour fermer le récipient (13, 32) avec un capuchon de fermeture (20) et avec un dispositif d'amenée de capuchons pour l'amenée d'un capuchon de fermeture (20) dans la station de remplissage (10, 30), un espace (15) sous pression étant prévu dans la station de remplissage (10, 30) lequel est réalisé et agencé pour, en mode opératoire, recevoir dans un espace étanchéifié par rapport à l'extérieur l'ouverture (14) du récipient (13, 32) et l'extrémité (16) de la tête de remplissage (11, 33) faisant face au récipient ainsi qu'un support de capuchon muni d'un capuchon de fermeture, la tête de remplissage (11, 33) étant mobile pour permettre un mouvement de déplacement d'une position de repos qui permet l'amenée d'un récipient (13, 32) et son introduction dans la station de remplissage (10, 30) vers une position de travail dans laquelle une section d'extrémité (16) de la tête de remplissage étanchéifie l'ouverture (14) du récipient introduit dans la station de remplissage (10, 30), la tête de remplissage (11, 33) étant, en mode opératoire, logée de façon mobile dans la station (10, 30) pour pouvoir être déplacée par un mouvement axial en sens longitudinal (100) du récipient et étant, en position de repos, agencée au-dessus de l'ouverture (11, 33) du récipient introduit dans la station de remplissage (10, 30), le récipient étant une préforme (32) qui, après son conditionnement thermique, obtient sa forme de récipient fini par l'introduction du produit de remplissage, la station de remplissage (33) présentant un moule (31) dans lequel la préforme (32) peut être introduite en vue du processus de remplissage et qui définit le contour final du récipient à mouler, et présentant une tête de remplissage (33) dans laquelle est de préférence prévue une barre d'étirage (34) déplaçable axialement pour l'étirage axial et le guidage de la préforme (32).

10. Dispositif selon la revendication 9, **caractérisé en ce que** le capuchon de fermeture est un capuchon de fermeture fileté (20) et la tête de remplissage (11) ou la tête de moulage et de remplissage (33) est réalisée et commandée de façon à, partiellement au moins, presser le capuchon de fermeture sur le récipient (13, 32).

11. Dispositif selon l'une des revendications 9 ou 10, **caractérisé en ce que** dans l'espace (15) sous pression est prévu un support de capuchon (19) dans lequel un capuchon de fermeture (20) peut être placé dans une position d'attente (41) avant le processus de remplissage et qui permet un déplacement du capuchon (20) de la position d'attente vers une position située entre l'extrémité (16) de la tête de remplissage (11, 33) côté récipient et l'ouverture (14) du récipient (13, 32).

12. Dispositif selon l'une des revendications 9 à 11, **caractérisé en ce que** l'espace sous pression est branché sur une conduite (17) d'alimentation en gaz, notamment en CO₂.

13. Dispositif selon l'une des revendications précédentes 9 à 12, **caractérisé en ce que** la tête de remplissage (11, 33) présente entre l'espace (15) sous pression et l'intérieur du récipient (13, 31) une conduite (50) d'équilibrage de pression de préférence contrôlée par une vanne commandable.
